(19) Europäisches Patentamt
European Patent Office
Office européen des brevets

(11) **EP 3 166 900 B1**

(12) **EUROPEAN PATENT SPECIFICATION**

(45) Date of publication and mention
of the grant of the patent:
**20.11.2019 Bulletin 2019/47**

(51) Int Cl.:
**C03C 15/00** *(2006.01)*     **C03C 19/00** *(2006.01)*

(21) Application number: **15734616.4**

(86) International application number:
**PCT/EP2015/064660**

(22) Date of filing: **29.06.2015**

(87) International publication number:
**WO 2016/005216 (14.01.2016 Gazette 2016/02)**

(54) **LOW SPARKLE GLASS SHEET**

**GLASSCHEIBE MIT GERINGEM GLITZERN**

**FEUILLE DE VERRE À FAIBLE BRILLANCE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.07.2014 EP 14176357**

(43) Date of publication of application:
**17.05.2017 Bulletin 2017/20**

(73) Proprietors:
• **AGC Glass Europe**
  **1348 Louvain-La-Neuve (BE)**
• **Asahi Glass Co., Ltd.**
  **Chiyoda-ku**
  **Tokyo 100-8405 (JP)**

(72) Inventors:
• **SINAPI, Fabrice**
  **B-5190 Spy (BE)**
• **PEYROUX, Eugénie**
  **B-1652 Alsemberg (BE)**

(74) Representative: **Le Vaguerèse, Sylvain Jacques**
**AGC Glass Europe**
**Technovation Centre**
**IP Department**
**Rue Louis Blériot, 12**
**6041 Gosselies (BE)**

(56) References cited:
**US-A1- 2011 267 697     US-A1- 2012 134 024
US-A1- 2012 134 025     US-A1- 2013 107 370**

**Description**

**1. Field of the Invention**

The present invention relates to a glass sheet which is particularly suitable for display applications as cover glass. In particular, the invention relates to a glass sheet which has excellent anti-sparkling properties together with an anti-glare effect. Moreover, the glass sheet of the invention also combines anti-glare and anti-sparkling properties with a "soft touch".

**2. Solutions of the Prior Art**

The glare reduction of a smooth surface (like a glass sheet) is particularly useful, or even mandatory, in display applications where bright light sources are present like in outdoor use where glare is often significant due to sunlight. Texturing a glass surface is widely used in the display industry for the reduction of glare. This texturing can be produced by several known methods like (i) removal of material from the smooth glass surface by chemical-etching or sandblasting or (ii) the application on the smooth surface of a rough coating by, for example, spraying, polymer web-coating or dip-coating.

Generally, there is a compromise between glare reduction of the surface and the degradation of transmission/resolution properties of the glass. In particular, increasing texture/roughness of a glass surface generally leads to undesired increase in haze and undesired rough touch feeling.

Moreover, with recent increases in the brightness and resolution of displays on the market, another serious issue for display developers has appeared. Indeed, one additional drawback of texturing a smooth surface to reduce glare in displays is the detrimental effect for viewers called "sparkle".

Finally, there was in these last years a huge development of tactile/touch technologies for displays. Together with such a development, there is also an increasing demand of the display market to have an anti-glare/anti-sparkle solution for cover glass sheets but while keeping/reaching a pleasant smooth touch sensation (often called a satin, silk or soft touch).

The documents US 2012/0134024 A1 and US 2013/0107370 A1 describe anti-glare and anti-sparkling surfaces characterised by specific haze and surface roughness properties.

**3. Objectives of the Invention**

The objective of the invention in particular is to remedy the cited disadvantages and resolving the technical problem, i.e. to provide a glass sheet which very low or no sparkle.

Another objective of the invention in at least one of its embodiments is to provide a glass sheet which shows very low or no sparkle combined with an antiglare effect.

Another objective of the invention in at least one of its embodiments is to provide a glass sheet which shows very low or no sparkle combined with a "soft touch".

Another objective of the invention in at least one of its embodiments is to provide a glass sheet which shows very low or no sparkle, which is chemically or thermally temperable.

Finally, another objective of the invention is to provide a solution to the disadvantages to the prior art that is simple, quick and, above all, economical.

**4. Outline of the Invention**

The invention relates to a glass sheet comprising at least one etched surface having a surface roughness defined, when measured on an evaluation length of 12 mm and with a Gaussian filter of which the cut-off wavelength is 0.8 mm, by:

$$0.02 \le \mathrm{Ra} \le 0.4 \text{ microns,}$$

$$5 \le \mathrm{RSm} \le 30 \text{ microns,}$$

said glass sheet having the following optical properties, when measured from said etched surface:

- a haze value of from 1 to 30%;

- a clarity value of from 50 to 100%;
- a gloss value at 60° of from 30 to 110 SGU.

Hence, the invention rests on a novel and inventive approach, since it enables a solution to be found for the disadvantages of prior art. The inventors have indeed found that it is possible to obtain an excellent anti-glare and anti-sparkle glass sheet, with pleasant smooth touch feeling, by considering a glass surface with a specific fine-tuned roughness together with specific optical properties.

Throughout the present text, when a range is indicated, the extremities are included. In addition, all the integral and subdomain values in the numerical range are expressly included as if explicitly written.

Other features and advantages of the invention will be made clearer from reading the following description of preferred embodiments given by way of simple illustrative and non-restrictive examples. As well as annexed figures among which:

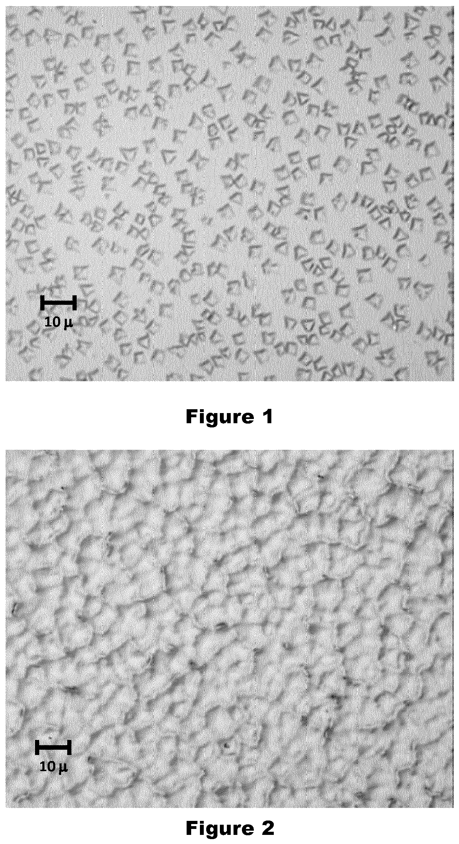

Figures 1 and 2 show pictures of optical microscopy of glass sheets according to the invention.

According to the invention, the glass sheet comprises at least one etched surface. By "etched surface", it is meant a surface which has been attacked by a mechanical or chemical way, removing a certain amount of glass material and giving a specific surface texture/roughness. We talk about chemically-etched glass when material removal occurs by chemical reactions/attack (i.e. acid etching). We talk about mechanically-etched glass when material removal occurs by mechanical reactions/attack (i.e. sandblasting). According to the invention, said at least one etched surface may be etched advantageously over substantially the entire glass surface, that-is-to-say over at least 90% of the glass surface.

The etched surface of a glass sheet is usually characterized by its surface texture or roughness, and in particular, by the Ra, Rz and Rsm values (expressed as microns) defined in the standard ISO 4287-1997. The texture/roughness is a consequence of the existence of surface irregularities/patterns. These irregularities consist of bumps called "peaks" and cavities called "valleys". On a section perpendicular to the etched surface, the peaks and valleys are distributed on either side of a "center line" (algebraic average) also called "mean line". In a profile and for a measurement along a fixed length (called "evaluation length") :

- Ra (amplitude value) corresponds to the average difference of texture, that is, means the arithmetic average of absolute values of differences between the peaks and valleys. Ra measure the distance between this average and the "line" and gives an indication of the height of the patterns on the etched surface;
- Rz (amplitude value) corresponds the "ten-point mean roughness" and is the sum of the average peak among 5 tallest peaks and the average valley between 5 lowest valleys.
- Rsm (spacing value, sometimes also called Sm) is the average distance between two successive passages of the profile through the "mean line"; and this gives the average distance between the "peaks" and therefore the average value of the widths of the patterns.

The roughness values according to the invention may be measured with a profilometer using 2D profiles (according to ISO4287 standard). Alternatively, one can use the technique of 3D profilometry (according to ISO 25178 standard) but isolating a 2D profile which then gives access to the parameters defined in the ISO4287 standard.

According to the invention, the roughness values are measured with a Gaussian filter, which is a filter of long wavelengths, also called profile filter $\lambda c$. It is used for separating the components of roughness/texture from components of undulation of the profile.

The evaluation length L according to the invention is the length of the profile used to evaluate the roughness. Base length, l is the part of the evaluation length used to identify irregularities characterizing the profile to assess. The evaluation length L is divided/cut into n base lengths l which depend on the profile irregularities. The base length l corresponds to the "cut-off" wavelength (or limit wavelength) of the Gaussian filter (l = $\lambda c$). Typically, the evaluation length is of at least five times the base length.

In roughness measurements, a short wavelength filter (profile filter $\lambda s$) is also commonly used to eliminate the effects of very short wavelengths which are background noise.

According to one embodiment of the invention, the surface roughness of the etched surface of the invention is such as : $10 \leq RSm \leq 30$ microns. Preferably, the surface roughness of the etched surface of the invention is such as : $10 \leq RSm \leq 25$ microns, and more preferably, such as : $10 \leq RSm \leq 20$ microns. Such a limited ranges of RSm roughness value provides to the glass sheet of the invention an increasing anti-sparkling effect.

According to another advantageous embodiment of the invention, the surface roughness of the etched surface of the invention is such as : $0.02 \leq Ra \leq 0.2$ microns. Preferably, the surface roughness of the etched surface of the invention is such as : $0.02 \leq Ra \leq 0.15$ microns. Such a limited ranges of Ra roughness value provides to the glass sheet of the invention a lower haze value.

According to another advantageous embodiment of the invention, the surface roughness of the etched surface of the invention is such as : 0.1 ≤ Rz ≤ 2.0 microns.

The glass sheet according to the invention shows excellent anti-sparkle properties together with an anti-glare effect.

The "anti-glare" property deals with external sources of reflection off a surface - like sunlight or ambient lighting conditions - and its impact on the readability of the image or information you are trying to read through the surface. It refers to the property of changing light reflected from the surface of an article, such as a glass sheet, into a diffuse reflection rather than a specular reflection. Anti-glare property does not reduce the global amount of light reflected from the surface but it only changes the characteristics of the reflected light (diffused component of reflected light increases when anti-glare effect increases).

"Sparkle" refers to small bright spots (approximately at the pixel-level size scale) that appear in the instant texture of an image of a display screen through an anti-glare glass surface and which gives to the transmitted image a grainy appearance. The "sparkling effect" is thus an optical interaction between two surface areas : the regular display pixel matrix (light source) and the anti-glare glass surface with less regular microstructures. It appears as a random fluctuation in intensity on a display (involving refraction, diffraction, diffusion phenomena) as the viewer's head moves from side-to-side.

The optical properties of the glass sheet according to the invention are characterized by :

- the direct total light transmission (or specular light transmission) ;
- the diffuse light transmission, measured through (i) the "haze" and (ii) the "clarity" : the "haze" corresponds to the diffuse transmittance at wide angles scattering while the "clarity" corresponds to the diffuse transmittance at narrow angles scattering ; and
- the gloss, characterizing, for example, the brightness or shine of a surface, and more particularly corresponding to the specular reflectance of a surface relative to a standard (such as, for example, a certified black glass standard) in accordance with ASTM standard D523 at a specific angle, and it is expressed in SGU (standard gloss units).

The term "diffuse" used for the light transmission is the proportion of light which, when passing through the glass, is deflected from the incident beam by dispersion of more than 2.5°. The term "diffuse" used for the light reflection is the proportion of light which, by reflection at the glass/air interface, is deflected from the specularly reflected beam by dispersion of more than 2.5°.

The optical properties of the glass sheet are measured in the present invention from the etched surface.

The glass sheet of the invention has the following optical properties, when measured from said etched surface:

- a haze value of from 1 to 30%;
- a clarity value of from 50 to 100%;
- a gloss value at 60° of from 30 to 110 SGU.

According to an advantageous embodiment of the invention, the glass sheet has a haze of from 1 to 20%. More preferably, the glass sheet has a haze of from 1 to 15%.

According to another advantageous embodiment of the invention, the glass sheet has a clarity of from 85 to 100%.

According to an advantageous embodiment of the invention, the glass sheet has a gloss value at 60° of from 50 to 110 SGU. More preferably, the glass sheet has a gloss value at 60° of from 70 to 100 SGU.

To quantify the glass transmission in the visible range, we define light transmission (TL) calculated between the wavelengths of 380 and 780 nm according to the ISO9050 standard and measured with the D65 illuminant (TLD) such as defined by ISO/CIE 10526 standard by considering the standard colorimetric observer CIE 1931 as defined by the ISO/CIE 10527 standard. As used herein, the light transmission is measured according to said standards and given for a thickness of 4 mm (TLD4) under a solid viewing angle of 2 °. The glass sheet according to the invention preferably has a light transmission TLD4 of at least 85 %, preferably at least 90%.

The glass sheet according to the invention is made of glass whose matrix composition is not particularly limited and may thus belongs to different categories. The glass may be a soda-lime-silicate glass, an alumino-silicate glass, an alkali-free glass, a boro-silicate glass, etc. Preferably, the glass sheet of the invention is made of a soda-lime glass or an alumino-silicate glass.

According to an embodiment of the invention, the glass sheet has a composition comprising, in a content expressed in percentages of the total weight of the glass:

$SiO_2$        55 - 85%

(continued)

| | |
|---|---|
| $Al_2O_3$ | 0 - 30% |
| $B_2O_3$ | 0 - 20% |
| $Na_2O$ | 0 - 25% |
| CaO | 0 - 20% |
| MgO | 0 - 15% |
| $K_2O$ | 0 - 20% |
| BaO | 0 - 20%. |

In a preferred manner, the glass sheet has a composition comprising, in a content expressed in percentages of the total weight of the glass:

| | |
|---|---|
| $SiO_2$ | 55 - 78% |
| $Al_2O_3$ | 0 - 18% |
| $B_2O_3$ | 0 - 18% |
| $Na_2O$ | 5 - 20% |
| CaO | 0 - 10% |
| MgO | 0 - 10% |
| $K_2O$ | 0 - 10% |
| BaO | 0 - 5%. |

In a more preferred manner, the glass sheet has a composition comprising, in a content expressed in percentages of the total weight of the glass:

| | |
|---|---|
| $SiO_2$ | 65 - 78% |
| $Al_2O_3$ | 0 - 6% |
| $B_2O_3$ | 0 - 4% |
| CaO | 0 - 10% |
| MgO | 0 - 10% |
| $Na_2O$ | 5 - 20% |
| $K_2O$ | 0 - 10% |
| BaO | 0 - 5%. |

Such a soda-lime-type base glass composition has the advantages to be inexpensive even if it is less mechanically resistant as such.

Ideally, according to this last embodiment, the glass composition does not comprise $B_2O_3$ (meaning that it is not intentionally added, but could be present as undesired impurities in very low amounts).

In a alternative more preferred manner, the glass sheet has a composition comprising, in a content expressed in percentages of the total weight of the glass:

| | |
|---|---|
| $SiO_2$ | 55 - 70% |
| $Al_2O_3$ | 6 - 18% |
| $B_2O_3$ | 0 - 4% |
| CaO | 0 - 10% |
| MgO | 0 - 10% |
| $Na_2O$ | 5 - 20% |
| $K_2O$ | 0 - 10% |
| BaO | 0 - 5%. |

Such an alumino-silicate-type base glass composition has the advantages to be more mechanically resistant but it is more expensive than soda-lime.

Ideally, according to this last embodiment, the glass composition does not comprise $B_2O_3$ (meaning that it is not intentionally added, but could be present as undesired impurities in very low amounts).

According to an advantageous embodiment of the invention, combinable with previous embodiments on base glass composition, the glass sheet has a composition comprising a total iron (expressed in terms of $Fe_2O_3$) content ranging from 0.002 to 0.06 wt%. A total iron (expressed in the form of $Fe_2O_3$) content of less than or equal to 0.06 wt% makes it possible to obtain a glass sheet with almost no visible coloration and allowing a high degree of flexibility in aesthetic designs (for example, getting no distortion when white silk printing of some glass elements of smartphones). The minimum value makes it possible not to be excessively damaging to the cost of the glass as such, low iron values often require expensive, very pure, starting materials and also purification of these. Preferably, the composition comprises a total iron (expressed in the form of $Fe_2O_3$) content ranging from 0.002 to 0.04 wt%. More preferably, the composition comprises a total iron (expressed in the form of $Fe_2O_3$) content ranging from 0.002 to 0.02 wt%. In the most preferred embodiment, the composition comprises a total iron (expressed in the form of $Fe_2O_3$) content ranging from 0.002 to 0.015 wt%.

According to another embodiment of the invention, in combination with previous embodiments on $Fe_2O_3$ content, the glass has a composition comprising chromium in a content such as : $0.0001\% \leq Cr_2O_3 \leq 0.06\%$, expressed in percentages of the total weight of glass. Preferably, the glass has a composition comprising chromium in a content such as : $0.002\% \leq Cr_2O_3 \leq 0.06\%$. This chromium content allows getting a glass with a higher IR transmission and it is thus advantageous when using the glass sheet in a touch panel using optical IR touch technologies like, for example, the Planar Scatter Detection (PSD) or Frustrated Total Internal Reflection (FTIR) (or any other technology requiring high transmission of IR radiation) in order to detect the position of one or more objects (for example, a finger or a stylus) on a surface of the glass sheet.

According to a preferred embodiment, the glass sheet of the invention is a float glass sheet. The term "float glass sheet" is understood to mean a glass sheet formed by the float process, which consists in pouring the molten glass onto a bath of molten tin, under reducing conditions. A float glass sheet comprises, in a known way, a "tin face", that is to say a face enriched in tin in the body of the glass close to the surface of the sheet. The term "enrichment in tin" is understood to mean an increase in the concentration of tin with respect to the composition of the glass at the core, which may or may not be substantially zero (devoid of tin). Therefore, a float glass sheet can be easily distinguished from sheets obtained by other glassmaking processes, in particular by the tin oxide content which may be measured, for example, by electronic microprobe to a depth of ~ 10 microns.

The glass sheet according to the invention may have a thickness of from 0.1 to 25 mm. Advantageously, in the case of display applications, the glass sheet according to the invention has preferably a thickness of from 0.1 to 6 mm. More preferably, in the case of display applications and for reasons of weight, the thickness of the glass sheet according to the invention is of from 0.1 to 2.2 mm.

The glass sheet according to the invention can advantageously be chemically or thermally tempered.

According to the applications, intended use and/or properties desired, various layer(s)/treatment(s) can be deposited/done on the glass sheet of the invention, on same face as the etched surface according to the invention and/or on the opposite face.

According to one embodiment of the invention, the glass sheet is coated with at least one transparent and electrically conducting thin layer. A transparent and conducting thin layer according to the invention can, for example, be a layer based on $SnO_2$:F, $SnO_2$:Sb or ITO (indium tin oxide), ZnO:Al or also ZnO:Ga. Advantageously, according to this embodiment, the glass sheet is coated with said transparent and electrically conducting thin layer on the glass face opposite to the etched surface.

According to another embodiment of the invention, the glass sheet is coated with at least one antireflection layer. Advantageously, according to this embodiment, the glass sheet is coated with said antireflection layer on the same glass face as the etched surface. This embodiment is advantageous in the case of use of the glass sheet of the invention as front cover of a screen. An antireflection layer according to the invention can, for example, be a layer based on porous silica having a low refractive index or it can be composed of several layers (stack), in particular a stack of layers of dielectric material alternating layers having low and high refractive indexes and terminating in a layer having a low refractive index.

According to still another embodiment, the glass sheet has at least one anti-fingerprint layer/treatment so as to reduce or prevent fingerprints from registering. Advantageously, according to this embodiment, the glass sheet has said anti-fingerprint layer/treatment on the same glass face as the etched surface. This embodiment is also advantageous in the case of use of the glass sheet of the invention as front cover of a touchscreen. Such a layer/treatment can be combined with a transparent and electrically conducting thin layer deposited on the opposite face. Such a layer/treatment can be combined with an antireflection layer deposited on the same face.

According to still another embodiment of the invention, the glass sheet has an antibacterial layer/treatment. Advantageously, according to this embodiment, the glass sheet has said antibacterial layer/treatment on the same glass face as the etched surface. For example, such an antibacterial treatment could be a diffusion of silver ions in the bulk of the glass sheet close to the external surface.

According to still another embodiment of the invention, the glass sheet is etched on the face opposite to the etched surface according the invention, in a same manner or in a different manner.

Moreover, the glass sheet according to the invention shows excellent mechanical properties. In particular, it shows an excellent resistance to abrasion.

The invention also relates to a glass sheet according to the invention which is chemically tempered. All previously described embodiments also apply to the invention of chemically tempered glass sheet.

Finally, the invention also relates to a display device comprising a glass sheet according to the invention. All previously described embodiments for the glass sheet also apply to the invention of display device.

Embodiments of the invention will now be further described, by way of examples only, together with some comparative examples, not in accordance with the invention. The following examples are provided for illustrative purposes, and are not intended to limit the scope of this invention.

**Examples**

Comparative Example 1 : soda-lime (SL) etched "LST" (or "LSTouch" or "low sparkling touch") glass from AGC Glass Europe, sold mainly for display applications, and with different gloss values available.

Comparative Examples 2-5 : soda-lime (SL) etched Matobel® glass from AGC Glass Europe, sold mainly for pictural framing applications.

Example 6-9 (according to the invention) - on soda-lime-type composition (SL)

For each example 6-9, a sheet of extra-clear glass of 0.7 mm thickness (10 cm x 10 cm) was washed with an aqueous detergent and dried. A tape was applied on one side of the glass in order to protect it during the etching process. Then, the glass was dipped in 200 mL of an acid-etching solution at 20-25°C during a time t. Finally the glass was removed and immediately washed with an aqueous detergent.

The soda-lime type (SL) composition of the glass was as follows, in weight percentages:

| | |
|---|---|
| $SiO_2$ | 72.15% |
| $Al_2O_3$ | 1.35% |
| $Na_2O$ | 13.90% |
| CaO | 7.90% |
| MgO | 4.50% |
| $K_2O$ | 0.2% |

Example 6 (on SL) : Acid-etching aqueous solution was composed of:

- $KHF_2$ 1.5 mol %
- $SnCl_2$ 0.25 mol %
- HF 2.0 mol%
- $HNO_3$ 0.5 mol%

The glass sample was removed after 85 seconds.
Example 7 (on SL) : Acid-etching aqueous solution was composed of:

- $KHF_2$ 1.5 mol %
- $SnCl_2$ 0.25 mol %
- HF 2.0 mol%
- $HNO_3$ 0.5 mol%

The glass sample was removed after 60 seconds.
Example 8 (on SL) : Acid-etching aqueous solution was composed of:

- $KHF_2$ 2.5 mol %
- $SnCl_2$ 0.25 mol %
- HF 2.5 mol%

- HNO$_3$ 0.5 mol%

The glass sample was removed after 95 seconds.

Example 9 (on SL) : Acid-etching aqueous solution was composed of:

- KHF$_2$ 2.5 mol %
- SnCl$_2$ 0.25 mol %
- HF 2.5 mol%
- HNO$_3$ 0.5 mol%

The glass sample was removed after 90 seconds.

Examples 10-11 (according to the invention) - on alumina-silicate-type composition (AS)

For each example 10-11, a sheet of extra-clear glass of 0.7 mm thickness (10 cm x 10 cm) was washed with an aqueous detergent and dried. A tape was applied on one side of the glass in order to protect it during the etching process. Then, the glass was dipped in 200 ml of an acid-etching solution at 20-25°C during a time of 20 seconds. Finally, the glass was removed and immediately washed with demineralized water.

The alumina-silicate type (AS) composition of the glass was as follows, in weight percentages:

| | |
|---|---|
| SiO$_2$ | 60.9% |
| Al$_2$O$_3$ | 12.8% |
| Na$_2$O | 12.2% |
| CaO | 0.1% |
| MgO | 6.7% |
| K$_2$O | 5.9% |
| BaO | 0.2% |
| SrO | 0.2% |
| ZrO$_2$ | 1.0% |

Example 10 (on AS) : Acid-etching aqueous solution was composed of:

- KHF$_2$ 5 mol%
- H$_2$SO$_4$ cc 2.7 mol%
- ABF 5mol%
- HF 2.80 mol%

Example 11 (on AS) : Acid-etching aqueous solution was composed of:

- KHF$_2$ 2.5 mol%
- Methacrylic acid 0.25 mol%
- ABF 5mol%
- HF 2.80 mol%

Texture and optical properties

Each of the glass sheets from Examples 1-11 were analyzed in terms of texture / surface roughness and optical properties.

Surface roughness measurements were performed using a 3D optical profiler Leica Type DCM3D, using the "Leica map" software, on an evaluation length of 12 mm and with a Gaussian filter of which the cut-off wavelength is 0.8 mm. The sample is first cleaned with detergent and dry. It is then placed under the microscope and after conventional settings, the profile of a 2D acquisition is then initiated (the software applies a default cut-off wavelength $\lambda$s of 2.5 microns).

Optical microscopy pictures have also been taken for several samples.

Haze and clarity measurements were performed according to ASTM standard D1003 with illuminant A2.

Gloss measurements were performed according to ASTM standard D523 at a specific angle of 60°.

Evaluation of anti-sparkling property of samples was made by a visual method, comparing all samples and establishing a ranking from the lower level value of anti-sparkling (0, the best sample considering anti-sparkling) to the higher value. For visual evaluation and comparison between samples, each sample was placed on an Apple iPad3 retina display showing a green background image, with its etched surface directed towards the viewer. During evaluation, the distance between the sample/screen and the viewer's eyes was approx. 40 cm.

The roughness parameters obtained and results for optical properties of Examples are given in Table.

| Exemple | | Glass type | Ra (μ) | Rsm (μ) | Rz (μ) | Haze (%) | Clarity (%) | Gloss (SGU) | Anti-sparkle ranking |
|---|---|---|---|---|---|---|---|---|---|
| Comparative | | | | | | | | | |
| 1 | Matobel® | SL | 0.505 | 180.5 | 2.7 | 6.3 | 47.3 | 65 | 5 |
| 2 | LST120 | SL | 0.098 | 38.9 | 0.66 | 1.1 | 88 | 112 | 3 |
| 3 | LST110 | SL | 0.128 | 45.8 | 1.33 | 1.1 | - | 107 | 4 |
| 4 | LST80 | SL | 0.181 | 46.9 | 1.28 | 3.0 | 64 | 75 | 2 |
| 5 | LST50 | SL | 0.342 | 61.2 | 2.12 | 8.8 | 37 | 50 | 1 |
| Invention | | | | | | | | | |
| 6 | | SL | 0.177 | 29 | 0.778 | 22.6 | 79.1 | 66 | **0** |
| 7 | | SL | 0.109 | 30.0 | 0.593 | 12.2 | 90.3 | 92 | **0** |
| 8 | | SL | 0.093 | 22.3 | 0.551 | 13.6 | 86.7 | 75 | **0** |
| 9 | | SL | 0.079 | 28.3 | 0.587 | 9.6 | 88.1 | 66 | **0** |
| 10 | | AS | 0.098 | 15.8 | 0.74 | 20.6 | 92.4 | 41.8 | **0** |
| 11 | | AS | 0.028 | 12.8 | 0.275 | 7.9 | 99.6 | 102 | **0** |

Observations

Optical microscopy images for example 6 and example 10, given at Figures 1 and 2, respectively, show the morphologies/geometrical structures that can be obtained while reaching roughness parameters and optical properties according to the invention.

Results in table well illustrates that glass sheets according to the invention show an excellent anti-sparkle effect, compared to commercialized glass sheets.

Finally, each sample according to the invention displays a touch feeling which is softer glass sheets from comparative examples.

**Claims**

1. Glass sheet comprising at least one etched surface having a surface roughness defined, when measured on an evaluation length of 12 mm and with a Gaussian filter of which the cut-off wavelength is 0.8 mm, by:

$$0.02 \leq Ra \leq 0.4 \text{ microns,}$$

$$5 \leq RSm \leq 30 \text{ microns,}$$

said glass sheet having the following optical properties, when measured from said etched surface:

- a haze value of from 1 to 30%;
- a clarity value of from 50 to 100%;
- a gloss value at 60° of from 30 to 110 SGU.

2. Glass sheet according to claim 1, **characterized in that** the surface roughness of the at least one etched surface has a Rz value greater than 0.05 and less than 2.5 microns.

3. Glass sheet according to preceding claim, **characterized in that** :

$$10 \leq RSm \leq 30 \text{ microns.}$$

4. Glass sheet according to preceding claim, **characterized in that** :

$$10 \leq RSm \leq 25 \text{ microns.}$$

5. Glass sheet according to preceding claim, **characterized in that** :

$$10 \leq RSm \leq 20 \text{ microns.}$$

6. Glass sheet according to preceding claims, **characterized in that**:

$$0.02 \leq Ra \leq 0.2 \text{ microns.}$$

7. Glass sheet according to preceding claim, **characterized in that** :

$$0.02 \leq Ra \leq 0.15 \text{ microns.}$$

8. Glass sheet according to preceding claims, **characterized in that**:

$$0.1 \leq Rz \leq 2.0 \text{ microns.}$$

9. Glass sheet according to preceding claims, **characterized in that** the clarity is of from 85 to 100%.

10. Glass sheet according to preceding claims, **characterized in that** the haze is of from 1 to 20%.

11. Glass sheet according to preceding claims, **characterized in that** the glass sheet has a composition comprising, in a content expressed in percentages of the total weight of the glass:

| | |
|---|---|
| $SiO_2$ | 55 - 78% |
| $Al_2O_3$ | 0 - 18% |
| $B_2O_3$ | 0 - 18% |
| $Na_2O$ | 5 - 20% |
| CaO | 0 - 15% |
| MgO | 0 - 10% |
| $K_2O$ | 0 - 10% |
| BaO | 0 - 5%. |

12. Glass sheet according to claim 11, **characterized in that** the glass sheet has a composition comprising, in a content expressed in percentages of the total weight of the glass:

| | |
|---|---|
| $SiO_2$ | 65 - 78% |
| $Al_2O_3$ | 0 - 6% |
| $B_2O_3$ | 0 - 4% |

(continued)

| | |
|---|---|
| CaO | 0 - 15% |
| MgO | 0 - 10% |
| $Na_2O$ | 5 - 20% |
| $K_2O$ | 0 - 10% |
| BaO | 0 - 5%. |

13. Glass sheet according to claim 11, **characterized in that** the glass sheet has a composition comprising, in a content expressed in percentages of the total weight of the glass:

| | |
|---|---|
| $SiO_2$ | 55 - 70% |
| $Al_2O_3$ | 6 - 18% |
| $B_2O_3$ | 0 - 4% |
| CaO | 0 - 15% |
| MgO | 0 - 10% |
| $Na_2O$ | 5 - 20% |
| $K_2O$ | 0 - 10% |
| BaO | 0 - 5%. |

14. Glass sheet according to preceding claims, **characterized in that** it is chemically tempered.

15. Display device comprising a glass sheet according to claims 1-14.

**Patentansprüche**

1. Glasscheibe, die mindestens eine geätzte Oberfläche umfasst, die eine Oberflächenrauheit aufweist, die bei Messung auf einer Bewertungslänge von 12 mm und mit einem Gauß-Filter, dessen Grenzwellenlänge 0,8 mm beträgt, definiert ist durch:

$$0{,}02 \leq Ra \leq 0{,}4 \; \text{Mikrometer,}$$

$$5 \leq RSm \leq 30 \; \text{Mikrometer,}$$

wobei die Glasscheibe, bei Messung von der geätzten Oberfläche aus, die folgenden optischen Eigenschaften aufweist:

- einen Trübungswert zwischen 1 und 30%;
- einen Bildschärfewert zwischen 50 und 100%;
- einen Glanzwert bei 60° zwischen 30 und 110 SGU.

2. Glasscheibe nach Anspruch 1, **dadurch gekennzeichnet, dass** die Oberflächenrauheit der mindestens einen geätzten Oberfläche einen Rz-Wert von über 0,05 und unter 2,5 Mikrometern aufweist.

3. Glasscheibe nach einem der vorhergehenden Ansprüche, **dadurch gekennzeichnet, dass**:

$$10 \leq RSm \leq 30 \; \text{Mikrometer.}$$

4. Glasscheibe nach einem der vorhergehenden Ansprüche, **dadurch gekennzeichnet, dass**:

$$10 \leq RSm \leq 25 \text{ Mikrometer.}$$

**5.** Glasscheibe nach einem der vorhergehenden Ansprüche, **dadurch gekennzeichnet, dass**:

$$10 \leq RSm \leq 20 \text{ Mikrometer.}$$

**6.** Glasscheibe nach einem der vorhergehenden Ansprüche, **dadurch gekennzeichnet, dass**:

$$0,02 \leq Ra \leq 0,2 \text{ Mikrometer.}$$

**7.** Glasscheibe nach einem der vorhergehenden Ansprüche, **dadurch gekennzeichnet, dass**:

$$0,02 \leq Ra \leq 0,15 \text{ Mikrometer.}$$

**8.** Glasscheibe nach einem der vorhergehenden Ansprüche, **dadurch gekennzeichnet, dass**:

$$0,1 \leq Rz \leq 2,0 \text{ Mikrometer.}$$

**9.** Glasscheibe nach einem der vorhergehenden Ansprüche, **dadurch gekennzeichnet, dass** die Bildschärfe zwischen 85 und 100% beträgt.

**10.** Glasscheibe nach einem der vorhergehenden Ansprüche, **dadurch gekennzeichnet, dass** die Trübung zwischen 1 und 20% beträgt.

**11.** Glasscheibe nach einem der vorhergehenden Ansprüche, **dadurch gekennzeichnet, dass** die Glasscheibe eine Zusammensetzung aufweist, die in einem in Prozent vom Gesamtgewicht des Glases ausgedrückten Gehalt umfasst:

| | |
|---|---|
| $SiO_2$ | 55 bis 78% |
| $Al_2O_3$ | 0 bis 18% |
| $B_2O_3$ | 0 bis 18% |
| $Na_2O$ | 5 bis 20% |
| CaO | 0 bis 15% |
| MgO | 0 bis 10% |
| $K_2O$ | 0 bis 10% |
| BaO | 0 bis 5%. |

**12.** Glasscheibe nach Anspruch 11, **dadurch gekennzeichnet, dass** die Glasscheibe eine Zusammensetzung aufweist, die in einem in Prozent vom Gesamtgewicht des Glases ausgedrückten Gehalt umfasst:

| | |
|---|---|
| $SiO_2$ | 65 bis 78%, |
| $Al_2O_3$ | 0 bis 6% |
| $B_2O_3$ | 0 bis 4% |
| CaO | 0 bis 15% |
| MgO | 0 bis 10% |
| $Na_2O$ | 5 bis 20% |
| $K_2O$ | 0 bis 10% |
| BaO | 0 bis 5%. |

**13.** Glasscheibe nach Anspruch 11, **dadurch gekennzeichnet, dass** die Glasscheibe eine Zusammensetzung aufweist, die in einem in Prozent vom Gesamtgewicht des Glases ausgedrückten Gehalt umfasst:

| | |
|---|---|
| $SiO_2$ | 55 bis 70% |
| $Al_2O_3$ | 6 bis 18% |
| $B_2O_3$ | 0 bis 4% |
| CaO | 0 bis 15% |
| MgO | 0 bis 10% |
| $Na_2O$ | 5 bis 20% |
| $K_2O$ | 0 bis 10% |
| BaO | 0 bis 5%. |

**14.** Glasscheibe nach einem der vorhergehenden Ansprüche, **dadurch gekennzeichnet, dass** sie chemisch getempert ist.

**15.** Anzeigegerät, das eine Glasscheibe nach Anspruch 1 bis 14 umfasst.

**Revendications**

**1.** Vitrage comprenant au moins une surface gravée possédant une rugosité de surface définie, lorsque mesurée sur une longueur d'évaluation de 12 mm et avec un filtre gaussien dont la longueur d'onde de coupure est de 0,8 mm, par :

$$0,02 \leq Ra \leq 0,4 \ microns,$$

$$5 \leq RSm \leq 30 \ microns,$$

ledit vitrage possédant les propriétés optiques suivantes, lorsque mesurées à partir de ladite surface gravée :

- un indice de turbidité de 1 à 30 % ;
- un indice de clarté de 50 à 100 % ;
- un indice de brillance à 60° de 30 à 110 SGU.

**2.** Vitrage selon la revendication 1, **caractérisé en ce que** la rugosité de surface de l'au moins une surface gravée possède une valeur Rz supérieure à 0,05 et inférieure à 2,5 microns.

**3.** Vitrage selon la revendication précédente, **caractérisé en ce que** :

$$10 \leq RSm \leq 30 \ microns.$$

**4.** Vitrage selon la revendication précédente, **caractérisé en ce que** :

$$10 \leq RSm \leq 25 \ microns.$$

**5.** Vitrage selon la revendication précédente, **caractérisé en ce que** :

$$10 \leq RSm \leq 20 \ microns.$$

**6.** Vitrage selon les revendications précédentes, **caractérisé en ce que** :

$$0,02 \leq Ra \leq 0,2 \text{ microns.}$$

7. Vitrage selon la revendication précédente, **caractérisé en ce que** :

$$0,02 \leq Ra \leq 0,15 \text{ microns.}$$

8. Vitrage selon les revendications précédentes, **caractérisé en ce que** :

$$0,1 \leq Rz \leq 2,0 \text{ microns.}$$

9. Vitrage selon les revendications précédentes, **caractérisé en ce que** la clarté est de 85 à 100 %.

10. Vitrage selon les revendications précédentes, **caractérisé en ce que** le trouble est de 1 à 20 %.

11. Vitrage selon les revendications précédentes, **caractérisé en ce que** le vitrage possède une composition comprenant, en une teneur exprimée en pourcentages du poids total du verre :

| | |
|---|---|
| $SiO_2$ | 55 à 78 % |
| $Al_2O_3$ | 0 à 18 % |
| $B_2O_3$ | 0 à 18 % |
| $Na_2O$ | 5 à 20 % |
| CaO | 0 à 15 % |
| MgO | 0 à 10 % |
| $K_2O$ | 0 à 10 % |
| BaO | 0 à 5 %. |

12. Vitrage selon la revendication 11, **caractérisé en ce que** le vitrage possède une composition comprenant, en une teneur exprimée en pourcentages du poids total du verre :

| | |
|---|---|
| $SiO_2$ | 65 à 78 % |
| $Al_2O_3$ | 0 à 6 % |
| $B_2O_3$ | 0 à 4 % |
| CaO | 0 à 15 % |
| MgO | 0 à 10 % |
| $Na_2O$ | 5 à 20 % |
| $K_2O$ | 0 à 10 % |
| BaO | 0 à 5 %. |

13. Vitrage selon la revendication 11, **caractérisé en ce que** le vitrage possède une composition comprenant, en une teneur exprimée en pourcentages du poids total du verre :

| | |
|---|---|
| $SiO_2$ | 55 à 70 % |
| $Al_2O_3$ | 6 à 18 % |
| $B_2O_3$ | 0 à 4 % |
| CaO | 0 à 15 % |
| MgO | 0 à 10 % |
| $Na_2O$ | 5 à 20 % |
| $K_2O$ | 0 à 10 % |

(suite)

BaO 0 à 5 %.

**14.** Vitrage selon les revendications précédentes, **caractérisé en ce qu'**il est trempé chimiquement.

**15.** Dispositif d'affichage comprenant un vitrage selon les revendications 1 à 14.

**Figure 1**

**Figure 2**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120134024 A1
- US 20130107370 A1